Europäisches Patentamt

**European Patent Office**

Office européen des brevets

(11) Publication number: **0 234 835**
**B1**

## EUROPEAN PATENT SPECIFICATION

(45) Date of publication of the patent specification:
**20.12.89**

(51) Int. Cl.⁴: **F16K 27/02,** F16L 47/00,
B29C 65/00

(21) Application number: **87301322.1**

(22) Date of filing: **16.02.87**

(54) Method for coupling two plastic constuctive parts used in valve, joint and pipe devices.

(30) Priority: **14.02.86 JP 31729/86**
**15.10.86 JP 245102/86**

(43) Date of publication of application:
**02.09.87 Bulletin 87/36**

(45) Publication of the grant of the patent:
**20.12.89 Bulletin 89/51**

(84) Designated Contracting States:
**CH GB LI**

(56) References cited:
**DE-A- 1 956 227**
**DE-U- 1 997 971**

**ENGINEERING, vol. 224, no. 9, October 1984,
pages 734-735, London, GB; K. WALKINSON "Snap-fit
joints in plastics"**

(73) Proprietor: **KUBOTA LIMITED,
2-47 Shikitsuhigashi 1-chome, Naniwa-ku Osaka-shi
Osaka-fu(JP)**

(72) Inventor: **Junsuke, Kyomen, c/o Kubota
No. 64 Ishizu-Kita, Sakai-Shi Osaka(JP)**
Inventor: **Sakaguchi, Masayuki, c/o Kubota
No. 64 Ishizu-Kita, Sakai-Shi Osaka(JP)**
Inventor: **Kajiwara, Hideki, c/o Kubota
No. 64 Ishizu-Kita, Sakai-Shi Osaka(JP)**
Inventor: **Matsumoto, Keiji, c/o Kubota
No. 64 Ishizu-Kita, Sakai-Shi Osaka(JP)**
Inventor: **Nishitani, Kenzo, c/o Kubota
No. 64 Ishizu-Kita, Sakai-Shi Osaka(JP)**
Inventor: **Kawamura, Yoshinori, c/o Kubota
No. 64 Ishizu-Kita, Sakai-Shi Osaka(JP)**
Inventor: **Ishihara, Katsuro, c/o Kubota
No. 64 Ishizu-Kita, Sakai-Shi Osaka(JP)**
Inventor: **Tanaka, Masakazu, c/o Kubota
No. 64 Ishizu-Kita, Sakai-Shi Osaka(JP)**

(74) Representative: **Lawson, David Glynne, MARKS &
CLERK 57-60 Lincoln's Inn Fields, London
WC2A 3LS(GB)**

## Description

This invention relates to a method of coupling and assembling two plastics members. The invention is particularly applicable to coupling and assembling tubular plastics members, for assembling mechanical parts such is valve, joint and pipe devices.

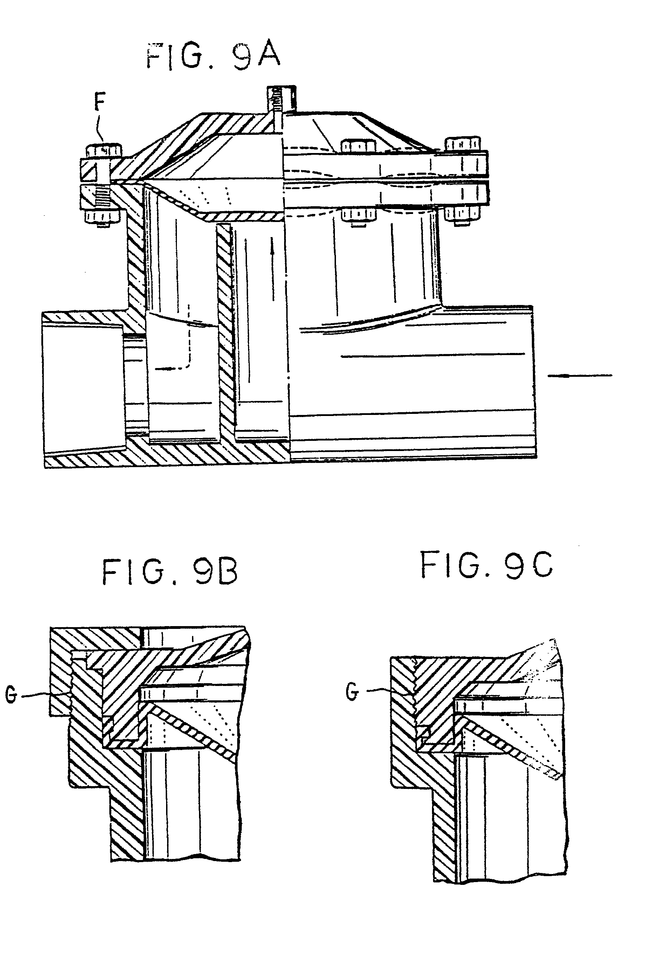

Figs. 9A to 10C of the accompanying drawings illustrate a conventional procedure for assembling a diaphragm system valve.

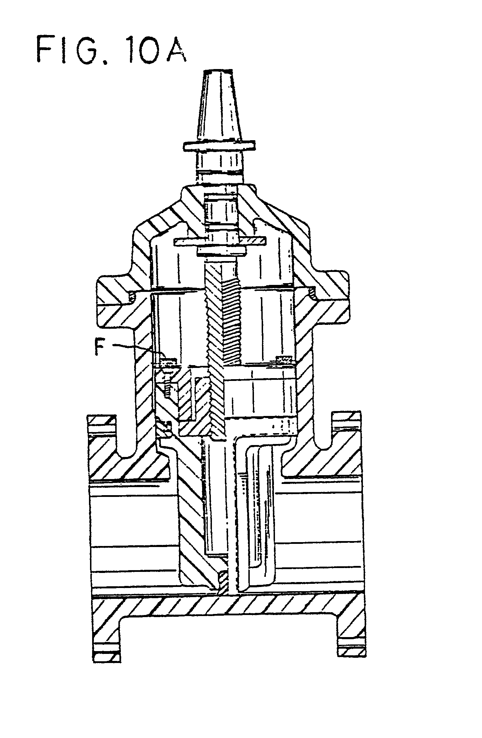

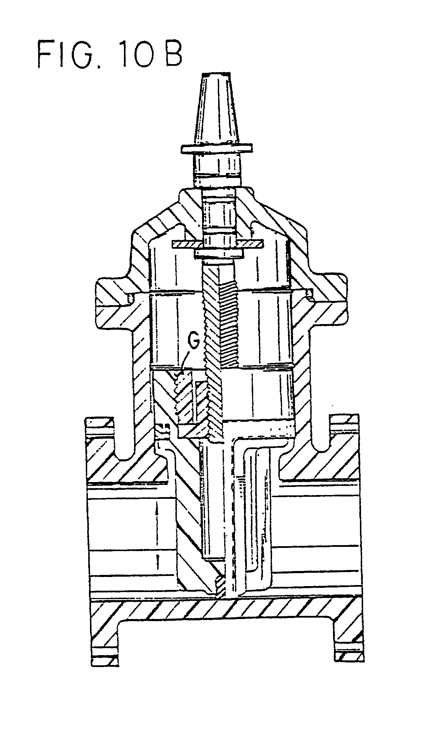

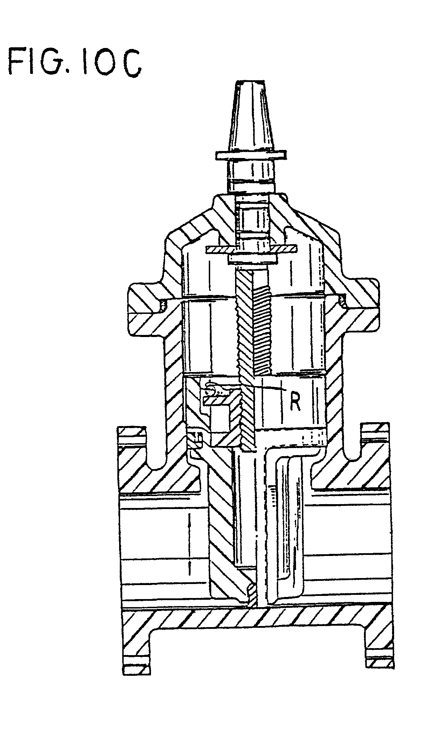

in assembling the diaphragm system valve, bolts F in Fig. 9A or a cylindrical screw G in Figs. 9B and 9C are used with two plastic constructive parts. In assembling a gate valve, bolts Fin Fig. 10A, a cylindrical screw G in Fig. 10B and a coupling ring R in Fig. 10C are used with tubelike members assembling a valve and an operating mechanism. In either case, assembly cost becomes high and the coupled part must be reinforced by thick construction, and cracks may occur in the coupled part on which local stress is applied. That is, rigidity becomes too high in the plastic constructional parts causing local cracking because of lost flexibility.

It is well known to assemble plastics parts using snap-fit joints, for example as described in "Engineering" Volume 224 No. 9, Oct. 1984, pages 734–735. However, conventional snap-fit joints have only limited applicability because of the limited strength or limited degree of flexing that can be achieved. Conventional snap-fit joints in plastics cannot provide reliable mechanical retention of relatively large components subjected to substantial mechanical stresses.

An object of the present invention is to provide a method of jointing plastics parts, capable of assembling various valve, joint, and pipe devices such that the directly coupled parts have high coupling accuracy, large coupling force, and durability. The present invention is particularly applicable to the coupling of plastics members in such a manner as to assemble mechanical parts.

According to the present invention there is provided a method of coupling and assembling two plastics members comprising: providing on one of said members a female part with an annular groove; and providing on the other of said members a male part with an annular protrusion; forcibly inserting said male part along with its annular protrusion into said female part; and positioning said annular protrusion in said annular groove for effecting coupling and assembling of the two plastics members; characterised in that said annular groove is formed internally axially of one axial end of said female part thereby defining an axial end section between said annular groove and said end of said female part, and has a radial depth (A) measured radially inwardly from the bottom of said annular groove, said female part has a radial wall thickness (B) measured radially outwardly from the bottom of said annular groove, and said axial end section has an axial length (C), with the relative relationship between (A), (B) and (C) being within the range of $3A \geq B > 1/2A$ and $5A \geq C \geq 1/2A$; said annular protrusion is formed externally of said male part and has a configuration conforming generally to the configuration of said annular groove; said axial end section is heated and softened at a temperature less than its melting point so as to impart to its said axial end section a softened elastic state; said male part along with its annular protrusion is forcibly inserted into said softened-elastic axial end section of said female part; said softened-elastic axial end section is temporarily radially widened by said forcible insertion step; and said annular protrusion is positioned in said annular groove as said temporarily widened softened-elastic axial end section returns to its initial, unwidened configuration, thereby effecting coupling and assembling of the two plastics members.

The present method enables members to be strongly jointed, eliminating the need for bolt holes and bolts, screw threads, metal coupling rings and other conventional fastening means.

The invention defines critical conditions in numerical relation, for controlling a deforming motion in the coupling process between the two plastics members in a softened elastic state of the female member, so that the annular protrusion and the annular groove are directly coupled by engagement between them. The defined conditions control deforming motion in the direct coupling process, the portion surrounding the annular groove undergoing radial widening motion and axial spring motion in elastic dynamics in response to the inserting movement of the annular protrusion, resulting in high coupling accuracy. The defined conditions provide a method for coupling the two plastics parts directly by compatibly establishing conditions for completing the coupling process successfully and for enabling a directly coupled part to have high accuracy, coupling force and durability.

The invention provides a method very suitably for coupling plastics members to assemble pipe devices such as a gate type valve, a diaphragm system valve, a union type joint strongly, durably or loosely.

## BRIEF DESCRIPTION OF THE DRAWINGS

Fig. 1 shows a gate valve in sectional view, which is assembled by the present method;

Figs. 2A, 2B, and 2C show the coupling process of the method used in Fig. 1 in sectional view;

Fig. 3 shows two constructive parts at the time of starting of the coupling process in partially sectional view;

Figs. 4 and 5 show respectively other examples different from that of Fig. 3. Figs. 6A, 6B, 6C, 6D, and 6E show the presence of critical conditions in numerical relation at the portion surrounding the annular groove in partially sectional view;

Fig. 7A shows a diaphragm system valve assembled by the present method in sectional view;

Figs. 7B and 7C show respectively the intermediate and final states of the process in partially sectional view;

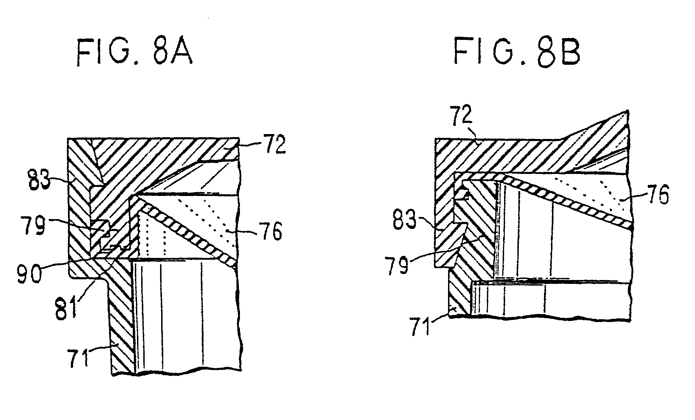

Figs. 8A and 8B show respectively other examples different from that of Fig. 7A;

Figs. 9A, 9B and 9C show conventional assemblies of a diaphragm valve; and

Figs. 10A, 10B and 10C show conventional assemblies of a gate valve.

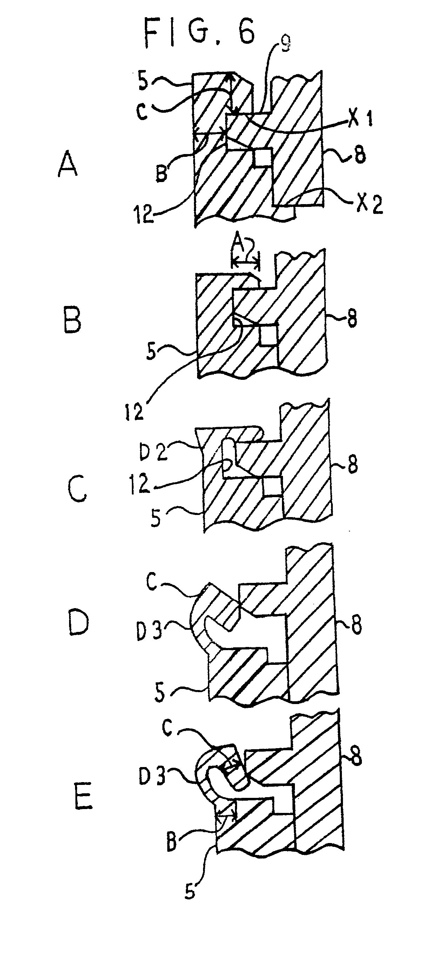

In the method of this invention, radial widening motion and axial spring motion shall be concurrently in useful balance occurred elastic-dynamically, when the female plastic tubelike member 5 in which an annular groove 12 was formed is being entered by a male plastic tube-like member 8 on which an annular protrusion 9 was formed, in axial direction in order to couple and engage the groove and protrusion, referring to Figs. 6A–6E. If the deforming motion cannot be controlled even if such motion were urged elastically, crushing arises at the part surrounding the annular groove, referring to Figs. 6D and 6E and the coupling process ends in failure.

The open end 10 of the female member 5 on the inner face of which the annular groove 12 was formed has critical numerical relations between the axial thickness C thereof, the groove wall thickness B and the groove depth A as follows:

$3A \geq B > 1/2A$ and $5A \geq C \geq 1/2A$; and

preferably $2A \geq B > 1/2A$ and $2A \geq C \geq A$

Outside the critical conditions, elastic deforming motion cannot be controlled to balance the radial widening motion and the axial spring motion, thereby leading to crushing the open end 10 of the female member 5 as shown in Fig. 6D or 6E. While the axial spring motion occurs normally at the axial wall of the annular groove 12, this motion helps to urge the open end 10 to cause the radially widening motion in response to inserting movement of the protrusion until the annular protrusion 9 snaps into the groove 12.

When the axial thickness C of the open end 10 is thinner than that equivalent to the groove depth A, the open end 10 crushes into the annular groove 12.

The groove depth A is equal to the axial direction thickness of the protrusion 9 here as a standard relation. Even if the thickness C becomes larger, for example, twice, three times, ... five times (preferably up to five times) larger than that equivalent to the groove depth A, crushing can be prevented under elastically dynamic motion in balance of the radial and axial actions for performing the deformation control.

The groove depth A and axial thickness of the protrusion 9 are previously determined corresponding to necessary coupling force, and real sizes for designing the open end and the annular groove 12 are determined based on them according to the critical condition. When the groove wall thickness B is more that 1/2 of the depth A, deformation control obtained here is effective. When it is equal to or less than 1/2, crushing deformation in Figs. 6C, 6D and 6E occurs. That is, even if the edge part were retained normally, the wall part was constricted to prevent the protrusion 9 from inserting in the groove.

The elastic deforming motion in the plastic tube-like member 5 in the state having elasticity due to heating will not cause horn type deformation in balance of the radial widening deformation motion and axial spring deformation motion under the critical condition above.

This is seen like "going through" of the protrusion 9 in the cylindrical wall of the open end as if the cylindrical wall on which the protrusion 9 is existed is expanded like swallowing of the snake, and the cylindrical wall seems to continue swallowing of the protrusion 9.

Such a continuous deforming motion is by application of elastic force of the groove wall B in the axial direction. Surely the groove wall B is not bent backward. A face (XI) of the protrusion 9 which becomes a coupling face is fit to the upper wall face (XI) of the annular groove port without clearance, and there is no clearance between the lower end face (X2) of the member 8 and an engaging face (X2) of the member 5 in the lower end. This coupling accuracy can be put in clearance within 0.5 mm when the axial length of the member 5 is 10 cm.

When the annular groove is a V-groove instead of a rectangular space of the above described groove, deformation control is performed by a motion bending the open end part outside into a horn type. It is very difficult to control the coupling process by bending deformation as long as the groove has an axial face in the rectangular shape.

Fig. 6A shows a coupling result when A:B:C=1:1:1. Fig. 6B shows the result when A:B:C=1:1:1/2. The coupling was correctly completed. Fig. 6C shows the result when A:B:C=1:1:1/3, and a deformation abnormality D2 occurred on the upper wall of the groove. Fig. 6D shows the coupling when A:B:C=1:1/2:1, and in this case, constriction D3 occurred on the groove wall. When thickness B is larger than 1/2 of the depth A, "constriction" is prevented. Fig. 6E is the coupling when A:B:C=1:1/2:1/2, and deformation control does not work. Of course, there are other factors by which the elastic-dynamic motion may be unbalanced, however, the critical condition in proportional relation mentioned above successfully controls the coupling process.

The upper limitation of the radial wall thickness B of the annular groove 12 is given by three times of that equivalent to the groove depth A. The elastic motion control can be obtained but the groove depth will be insufficient relatively against thickness of the used plastic tubelike member. Thus, the thickness B is preferably limited by $2A \geq B > 1/2A$ to obtain good coupling force and to get the elastic motion control.

The axial thickness C of the open end 10 is limited by $5A \geq B \geq 1/2A$, preferably $2A \geq C \geq A$. Because thermal control becomes very difficult when the open end 10 is too large to have the axial thickness C more than five times of that equivalent to the groove depth A. At $2A \geq C \geq A$, the most reliable control may be secured. Furthermore, the axial distance of the open end part 10 to the position of the annular groove 12 is limited to within two times that equivalent to the diameter of the tubelike member, preferably the distance as same as the diameter. By such limitation, thermal control is efficiently maintained during the coupling process to cause the elastic motions balanced in radial and axial direction.

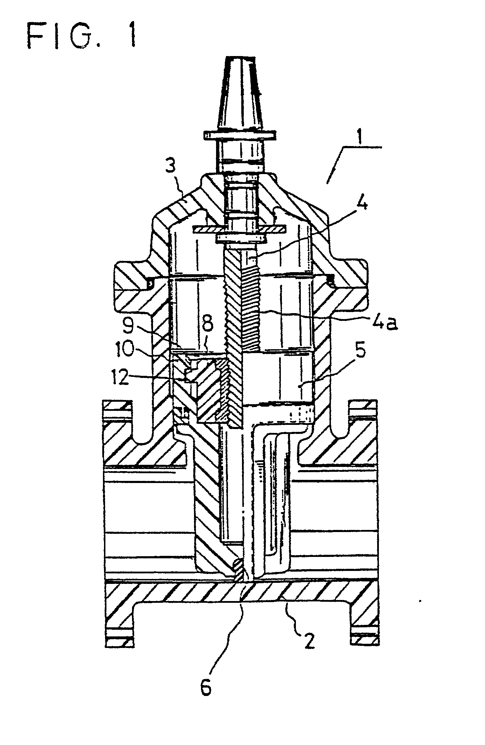

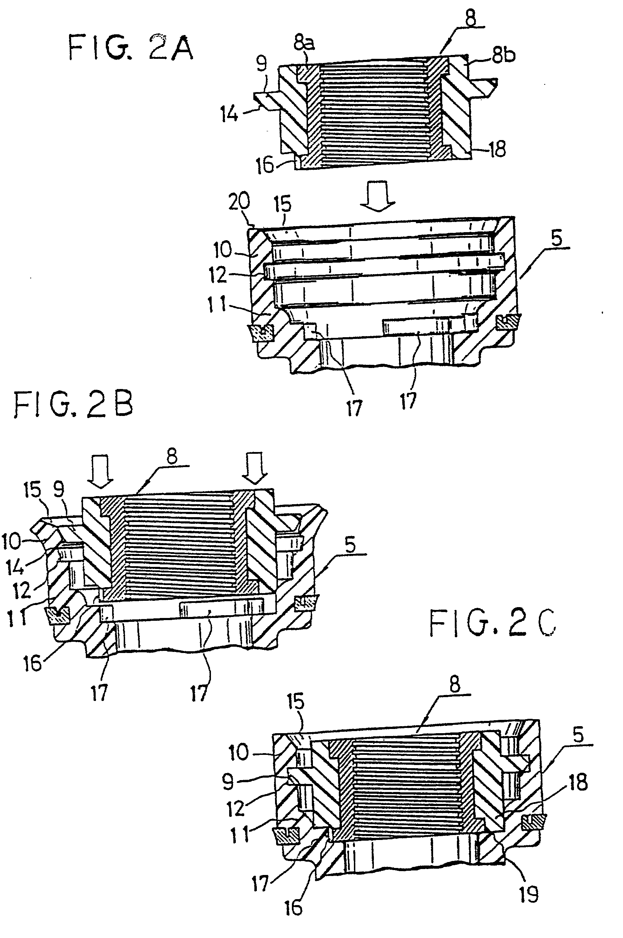

Fig. 1 shows a sectional view of a synthetic resin gate valve manufactured by a method of this invention. In Fig. 1, 2 is a valve box, 3 is a cap, 4 is a valve rod having a male screw 4a on the outer periphery thereof, 5 is a valve member and 6 is a packing mounted on the valve member 5, and a rotor 8 formed with the male screw 4a of the valve rod 4 is assembled in the valve member 5 by the method of this invention.

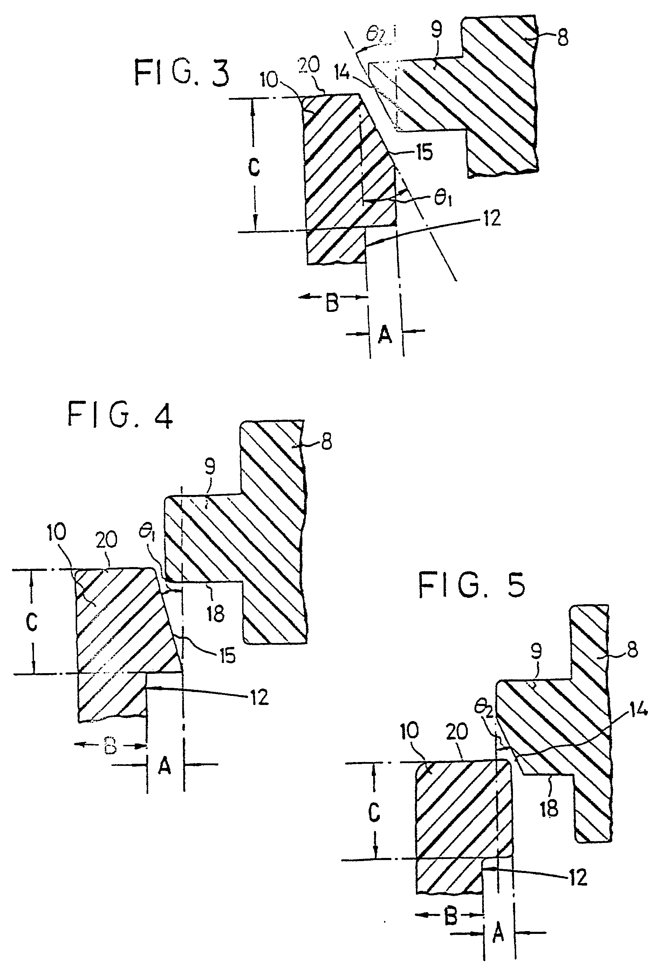

Figs. 2A–2C are enlarged sectional views of principal parts providing the process of assembling the rotor in the valve 5 in sequence by the method of this invention. In Fig. 2A, 5 is a valve member of a polyvinyl chloride resin female formed by injection molding, and an annular groove 12 is formed on the inner peripheral face of an open end part 10, and a chamfering taper 15 is formed on the inner peripheral edge of the open edge part. The rotor 8 which is a male body is anchored on the outer peripheral face of the engraved member 8a of the metal female screw by injection molding of a polyvinyl chloride resin member 8b, and annular protrusion 9 is formed on the outer peripheral face of the rotor 8 and a chamfering taper 14 is formed on the outer peripheral edge of the protrusion 9.

Recesses 16, 16... for rotational coupling are provided on the outer periphery of the lower end 18 of the rotor B, and corresponding convex coupling parts 17, 17... are provided on the lower end of the inner periphery of the coupled parts 11 of the valve member 5.

In inserting to assemble the rotor 8 in the valve member 5, the open end part 10 of the valve member 5 is heated to 120 ~ 150°C and softened to a rubberlike elastic condition. It is heated by any suitable known method such that the open end part 10 is inserted in a heater thereby to soften the part 10 from the open end to the annular groove 12. Uniform heating from the open end face 20 to the depth of the annular groove 12 is desirable. Next, when pushing the rotor 8 in the arrow direction from the open end of the valve member 5, the chamfering taper 14 of the annular protrusion 9 contacts the chamfering taper 15 of the open end part of the valve member 5 and widens the radius of the open end part 10 in the rubberlike elastic condition as shown in Fig. 2B. When continuing to insert the rotor 8 in the arrow direction, the protrusion 9 enters the groove 12 and the recesses 16 are coupled with the convex parts 17, and the lower end 18 of the rotor 8 contacts the wall 19 of the valve member 5. At this time, the open end part 10 of the valve member 5 is in a rubberlike condition as in Fig. 2C, and internal stress of constriction which was regulated at the time of injection molding is released to generate a little constriction, and the rotor 8 is assembled between the open end part 10 and the wall of the valve member 5 in pushed condition without clearance. Therefore, high assembling accuracy is obtained.

In performing this invention, deformation control during insertion of the male body into the open end part in rubberlike condition is an important point, and this point will be explained in detail referring to Figs. 6A to 6E.

Fig. 3 is a sectional view of enlarged part of the open end part 10 of the valve member 5 and the protrusion 9 of the rotor 8 in one example. In this, chamfering taper 15 is formed on the inner peripheral edge of the open end part 10 and the chamfering taper 14 is on the outer peripheral edge of the protrusion 9 as described before, the angles $\theta_1, \theta_2$ of respective chamfering tapers are each 20°. The relation among the axial distance C between the open end fache 20 of the open end part 10 to the groove 12, the groove depth A of the groove part 12 and the groove bottom wall thickness B is given as $3A \geq B > 1/2A$ and $5A \geq C \geq 1/2A$; and $2A \geq B > 1/2A$ and $2A \geq C \geq A$, and they are formed on this relation. Insertion of the rotor 8 into the valve 5 under this relation brings favourable deformation control against the open end part 10 which is in rubberlike elastic condition to realize very accurate direct coupling. Formation of the groove 12 on the inner peripheral face of the open end part 10 makes thinner part on the open end part 10, which promotes crushing deformation and bending deformation. However, when the relation among C, A and B is made to be $3A \geq B > 1/2A$ and $5A \geq C \geq 1/2A$, preferably $2A \geq B > 1/2A$ and $2A \geq C \geq A$, such crushing deformation and bending deformation can be restrained. By the chamfering tapers formed, deformation control against the open end part 10 is made smoothly by partial of pushing force, and deforming force is directed outwards to urge the radially widening motion.

Figs. 4 and 5 are sectional views of enlarged principal parts of the open end parts 10 and protrusion 9 in another example. In Fig. 4 the chamfering taper 15 is formed only on the inner peripheral edge of the open end part 10 and a chamfering taper is not formed on the outer peripheral edge of the protrusion 9, and in Fig. 5, the chamfering taper 14 is formed on the outer peripheral edge of the protrusion 9 and a chamfering taper is not formed on the inner peripheral edge of the open end part 10. Similarly as in Fig. 3, the relation of $3A \geq B > 1/2A$ and $5A \geq C \geq 1/2A$, preferably $2A \geq B > 1/2A$ and $2A \geq C \geq A$ is satisfactory for desirable deformation to the open end part 10 in Figs. 4 and 5.

The angles $\theta_1, \theta_2$ of the chamfering tapers in the examples of Figs 4 and 5 should be 45° or less so as to increase the component of outwards for smooth motion will be prevented.

As described above, an example of application of the method of this invention to the valve body of a gate valve is given, however this invention is not limited to this example. If at least an open end part of a female body is made of thermoplastic resin member such as polyvinyl chloride, polystyrene, polycarbonate, polypropylene etc. having a nature in which the part is heated and softened to be rubberlike elastic condition, this invention can be applied, and it is possible to apply not only to the valve body of a gate valve but to assembling of various shapes of member, and furthermore no limitation is given to the material and shape even for the male body to be inserted. Or formation of a plurality of grooves on an inner peripheral face of a female body and formation of a plurality of protrusions on an outer peripheral face of a male body can be applied in place of annular protrusion and groove.

Furthermore, the shape of the open end part of the female body is not necessarily limited to be cylindrical and even if it is hexagonal or octagonal, the method of this invention can be applied.

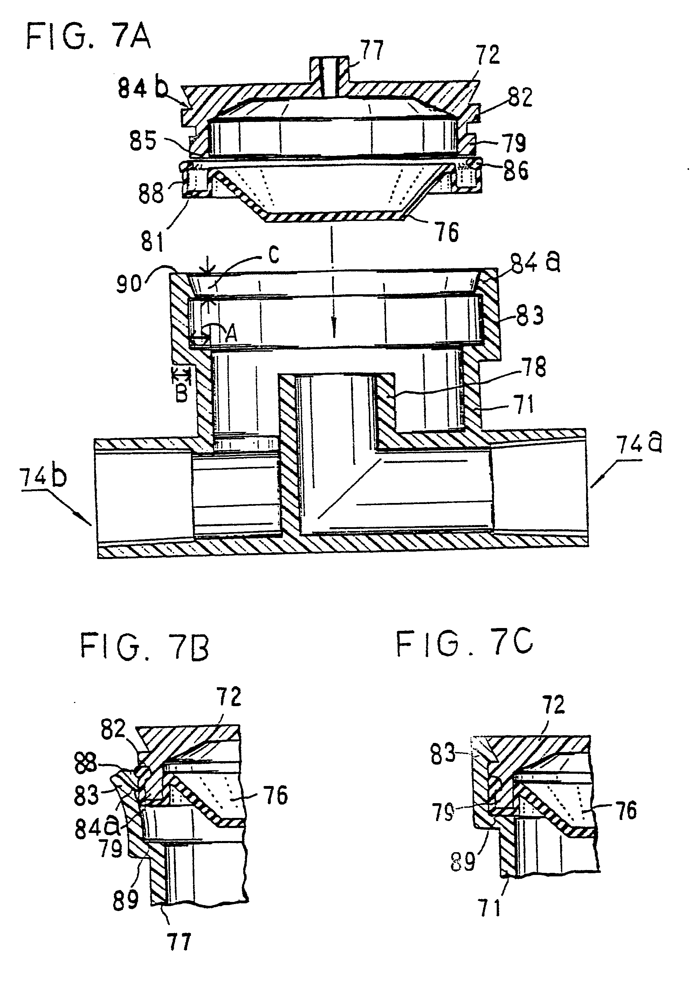

Figs. 7A–7C are sectional drawings showing the process of assembling another valve by this invention. Unions 74a, 74b for connecting pipes are formed on the lower portion of a valve body 71, and a cylindrical female body 83 is formed on the upper portion. An inner peripheral face side annular coupling part 84a protrudes on the inner peripheral face of the female body 83 to form an annular groove.

A male body 79 is annularly formed on the lower portion of an upper lid 72 and an outer peripheral side annular coupling part 84b of concave groove shape is formed on the outer periphery of the male body 79 to form an engaging protrusion. A facing side annular coupling part 85 is formed on the end part of the male body 79, and coupled to an annular coupling channel 81 formed on the peripheral edge of a diaphragm. An O-ring 86 of the outermost peripheral edge of the diaphragm 76 is inserted in the outer peripheral groove 82 of the male body 79 and the diaphragm outer peripheral edge is arranged so as to wrap the end part of the male body 79.

After coupling the upper lid 72 and the diaphragm 76, they are inserted into the valve body 71 as shown by chainline arrow. To reduce coupling resistance of the male body 79 and the female body 83, the open end part of the female body 93 is heated to 120~150°C and softened to a rubberlike elastic condition. The heating is performed by a well-known method of inserting the open end part into a heater, and uniform heating from the open end face 90 of the female body to the depth of the annular groove 83 is desirable.

A lubricant is applied to the diaphragm outer periphery 88. The kind of lubricant is not limited, but typically liquid silicone oil or graphite powder is used. The friction coefficient of the diaphragm formed by rubber is large and the inner peripheral face of the female body 83 has a friction coefficient increased by heating, but such friction is reduced by use of lubricant.

In the case of handling a synthetic resin which is heated and softened to be rubberlike elastic, control of rubberlike elasticity in coupling step is extremely difficult. Much failure before development of this invention was caused by non-insertion of the protrusion of the male body into the groove of the female body coupling part. Destruction of the female body groove is found to be caused by uncontrollable competition of the hard protrusion and the groove in rubberlike elastic state, then ideal direct coupling of the groove and the protrusion depends on how to control deforming motion against the rubberlike elastic groove. The critical condition mentioned above can realize deformation control required to obtain highly accurate coupling.

Fig. 7B shows the condition in which the coupled part of the upper lid 72 and the diaphragm 76 is begun to be pushed into the female body 83 according to the above condition. The inner peripheral face side annular coupling part 84a to be contacted to the diaphragm outer peripheral face 88 is radially widened in the peripheral direction and pushed to be expanded. Here chamfering tapering up to 45° is applied to the female body open part and the male protrusion, and smooth coupling is promoted. When the diaphragm face on the tip side of the male body 79 reaches the seal part 89 of the female body 83, coupling of the female body 83 and the male body 79 is completed and the tip part of the female body 83 radially widened is restored to the original shape immediately according to the shape memory effect, and the outer peripheral side coupling part 84a of the male body is coupled to fit to the inner peripheral face side annular coupling part 84b of the female body as in Fig. 7C. Provided that, when the relation among the receiving groove depth A of the female body, coupling wall thickness B and flange part C is as follows B ≤ 1/2A, C < 1/2A, restoration of the female flange part to the original shape becomes insufficient, and radial widening phenomenon is irregularly generated. As long as the coupling process is controlled in the critical condition, the outer peripheral edge of the diaphragm 76 is reliably contacted between the male body 79 and the female body 83 and pinched.

## Claims

1. A method of coupling and assembling two plastics members comprising:

providing on one of said members (5) a female part with an annular groove (12); and providing on the other of said members (8) a male part with an annular protrusion (9);

forcibly inserting said male part along with its annular protrusion into said female part; and

postioning said annular protrusion (9) in said annular groove (12) for effecting coupling and assembling of the two plastics members;

characterized in that said annular groove (12) is formed internally axially of one axial end of said female part thereby defining an axial end section between said annular groove and said end of said female part, and has a radial depth (A) measured radially inwardly from the bottom of said annular groove, said female part has a radial wall thickness (B) measured radially outwardly from the bottom of said annular groove, and said axial end section has an axial length (C), with the relative relationship between (A), (B) and (C) being within the range of $3A \geq B > 1/2A$ and $5A \geq C \geq 1/2A$; said annular protrusion (9) is formed externally of said male part and has a configuration conforming generally to the configuration of said annular groove;

said axial end section is heated and softened at a temperature less than its melting point so as to impart softened elasticity to its said axial end section a state;

said male part along with its annular protrusion is forcibly inserted into said softened-elastic axial end section of said female part;

said softened-elastic axial end section is temporarily radially widened by said forcible insertion step; and

said annular protrusion is positioned in said annular groove as said temporarily widened softened-elastic axial end section returns to its initial unwidened configuration, thereby effecting coupling and assembling of the two plastics members.

2. A method according to claim 1, wherein the relative relationship between (A), (B) and (C) is within the range of 2A ≥ B > 1/2A and 2A ≥ C ≥ A.

3. A method according to claim 1 or 2, wherein said two plastic members form part of a valve assembly.

4. A method according to claim 3, wherein said one member is a moveable valve closure element and said other member supports a valve operating mechanism which is operable to move said moveable valve closure element.

5. A method according to claim 3, wherein said other member is a moveable valve closure element and said one member supports a valve operating mechanism which is operable to move said moveable valve closure element.

6. A method according to claim 3, wherein said one member is a valve housing and said other member mounts a diaphragm juxtaposed to said annular protrusion.

7. A method according to claim 3, wherein one of said members is a valve housing and a diaphragm is disposed between said first internal cylindrical part and said second external cylindrical part when said two members are in said coupled and assembled condition.

8. A method according to any preceding claim, wherein said first internal cylindrical part is made from a material selected from polyvinyl chloride, polystyrene polycarbonate and polypropylene.

9. A method according to any preceding claim further comprising forming said annular protrusion with an outer radial conical surface with the diameter of said conical surface progressively increasing towards the axial end of said external cylindrical part that is first inserted into said elastic axial end section of said internal cylindrical part during said forcible insertion step, said conical surface providing for progressive widening of said elastic axial end section during said forcible insertion step.

10. A method according to any of claims 1 to 8 further comprising forming said axial end section and said annular protrusion with respective conical surfaces such as to have a complementary relationship face to face, one said conical surface on said axial end section having a diameter progressively decreasing as the axial end section of said internal cylindrical part is approached, and said other conical surface on said annular protrusion having a diameter progressively increasing towards the axial end of said external cylindrical part that is first inserted into said elastic axial end section of said internal cylindrical part during said forcible insertion step, said conical surfaces providing for progressive widening of said elastic axial end section during said forcible insertion step.

## Revendications

1. Procédé de raccordement et d'assemblage de deux éléments en matière plastique comprenant:
le fait de prévoir sur l'un des dits éléments (5) une partie femelle avec une rainure annulaire (12); et le fait de prévoir sur l'autre des dits éléments (8) une partie mâle avec une protubérance annulaire (9);
l'insertion à force de la dite partie mâle avec sa protubérance annulaire dans la dite partie femelle; et
le positionnement de la dite protubérance annulaire (9) dans la dite rainure annulaire (12) afin d'effectuer le raccordement et l'assemblage des deux éléments en matière plastique;
caractérisé en ce que la dite rainure annulaire (12) est formée axialement et à l'intérieur d'une extrémité axiale de la dite partie femelle, définissant de ce fait une section d'extrémité axiale entre la dite rainure annulaire et la dite extrémité de la dite partie femelle, et a une profondeur radiale (A) mesurée radialement vers l'intérieur depuis le fond de la dite rainure annulaire, en ce que la partie femelle a une épaisseur de paroi radiale (B) mesurée radialement vers l'extérieur depuis le fond de la dite rainure annulaire, et en ce que la dite section d'extrémité axiale a une longueur axiale (C), avec la relation entre (A), (B) et (C) contenue dans les limites 3A ≥ B > 1/2A et 5A ≥ C ≥ 1/2A; en ce que la dite protubérance annulaire (9) est formée sur l'extérieur de la partie mâle et présente une configuration se conformant de manière générale à celle de la dite rainure annulaire;
en ce que la dite section d'extrémité axiale est chauffée et ramollie à une température inférieure à son point de fusion de façon à lui donner une élasticité à l'état ramolli;
en ce que la dite partie mâle avec sa protubérance annulaire est insérée à force dans la dite section d'extrémité axiale ramollie élastique de la dite partie femelle;
en ce que la dite section d'extrémité axiale ramollie élastique est temporairement élargie radialement par a dite étape d'insertion à force; et
en ce que la dite protubérance annulaire est positionnée dans la dite rainure annulaire alors que la section d'extrémité axiale ramollie élastique retourne à sa configuration initiale non élargie, effectuant de ce fait le raccordment et l'assemblage des deux éléments en matière plastique.

2. Procédé selon la revendication 1, dans lequel la relation entre (A), (B) et (C) est contenue dans les limites 2A ≤ B > 1/2A et 2A ≤ C ≤ C.

3. Procédé selon la revendication 1 ou 2, dans lequel les dits deux éléments en matière plastique constitue une partie d'un assemblage de soupape.

4. Procédé selon la revendication 3, dans lequel l'un des dits éléments est un élément de fermeture de soupape mobile et dans lequel l'autre des dits éléments supporte un mécanisme d'actionnement de soupape qui sert à déplacer le dit élément de fermeture de soupape mobile.

5. Procédé selon la revendication 3, dans lequel l'autre des dits éléments est un élément de fermeture de soupape mobile et dans lequel l'un des dits éléments supporte un mécanisme d'actionnement de soupape qui sert à déplacer le dit élément de fermeture de soupape mobile.

6. Procédé selon la revendication 3, dans lequel l'un des dits éléments est un boîtier de soupape et l'autre des dits éléments sert à monter un diaphragme juxtaposé à la dite protubérance annulaire.

7. Procédé selon la revendication 3, dans lequel l'un des dits éléments est un boîtier de soupape et dans lequel un diaphragme est disposé entre la dite première partie cylindrique interne et la dite seconde partie cylindrique externe lorsque les deux dits éléments sont en condition raccordée et assemblée.

8. Procédé selon l'une quelconque des revendications précédentes, dans lequel la dite première partie cylindrique interne est réalisée dans une matière choisie parmi le chlorure de polyvinyle, le polystyrène, le polycarbonate et le polypropylène.

9. Procédé selon l'une quelconque des revendications précédentes, comportant en outre la réalisation de la dite protubérance annulaire avec une surface conique radiale externe dont le diamètre croît progressivement en direction de l'extrémité axiale de la dite partie cylindrique externe qui est insérée en premier dans la dite section d'extrémité axiale élastique de la dite partie cylindrique interne au cours de la dite étape d'insertion à force, la dite surface conique servant à l'élargissement progressif de la dite section d'extrémité axiale élastique au cours de la dite étape d'insertion à force.

10. Procédé selon l'une quelconque des revendications 1 à 8, comportant en outre la réalisation de la dite section d'extrémité axiale et de la dite protubérance annulaire avec des surfaces coniques respectives de façon à avoir une relation de complémentarité face à face, l'une des dites surfaces coniques sur la dite section d'extrémité axiale ayant un diamètre progressivement décroissant lorsque la section d'extrémité axiale de la dite partie cylindrique interne est approchée, et l'autre des dites surfaces coniques sur la dite protubérance annulaire ayant un diamètre progressivement croissant en direction de l'extrémité axiale de la dite partie cylindrique externe qui est insérée en premier dans la dite section d'extrémité axiale élastique de la dite partie cylindrique interne au cours de la dite étape d'insertion à force, les dites surfaces coniques servant à l'élargissement progressif de la dite section d'extrémité axiale élastique au cours de la dite étape d'insertion à force.

## Patentansprüche

1. Verfahren zum Koppeln und Zusammensetzen von zwei Kunststoffelementen, bei dem an einem der Elemente (5) ein Aufnahmeteil mit einer Ringnut (12) und am anderen Element (8) ein Einsetzteil mit einem Ringvorsprung (9) ausgebildet werden, der Einsetzteil unter Ausübung einer Kraft zusammen mit seinem Ringvorsprung in den Aufnahmeteil eingesetzt wird und der Ringvorsprung (9) in der Ringnut (12) angeordnet wird, um die Kopplung und das Zusammensetzen der beiden Kunststoffelemente zu bewirken, dadurch gekennzeichnet, daß die Ringnut (12) innen axial von einem axialen Ende des Aufnahmeteils ausgebildet wird, so daß ein axialer Endabschnitt zwischen der Ringnut und dem genannten Ende des Aufnahmeteils begrenzt ist, die Ringnut (12) eine radiale Tiefe (A), gemessen radial innen vom Boden der Ringnut, hat, der Aufnahmeteil eine radiale Wandstärke (B), gemessen radial nach außen vom Boden der Ringnut, hat und der axiale Endabschnitte eine axiale Länge (C) hat, wobei die relative Beziehung zwischen (A), (B) und (C) im Bereich $3A \geq B > 1/2A$ und $5A \geq C \geq 1/2A$ liegt, der Ringvorsprung (9) an der Außenseite des Einsetzteils ausgebildet ist und eine Form hat, die im wesentlichen mit der Form der Ringnut übereinstimmt, der axiale Endabschnitt auf eine Temperatur erwärmt und erweicht wird, die unter seinem Schmelzpunkt liegt, um dem axialen Endabschnitt einen elastisch erweichten Zustand zu geben, der Einsetzteil zusammen mit seinem Ringvorsprung unter Ausübung einer Kraft in den elastisch erweichten axialen Endabschnitt des Aufnahmeteils eingesetzt wird, der elastisch erweichte axiale Endabschnitt kurzzeitig radial durch das unter Ausüben einer Kraft bewirkte Einsetzen aufgeweitet wird und der Ringvorsprung in der Ringnut angeordnet wird, während der kurzzeitig erweiterte elastisch erweichte axiale Endabschnitt in seine anfängliche, nicht erweitete Form zurückkehrt, wodurch eine Kopplung und ein Zusammensetzen der beiden Kunststoffelemente bewirkt wird.

2. Verfahren nach Anspruch 1, bei dem die relative Beziehung zwischen (A), (B) und (C) im Bereich von $2A \geq B > 1/2A$ und $2A \geq C \geq A$ liegt.

3. Verfahren nach Anspruch 1 oder 2, bei dem die beiden Kunststoffelemente Teile einer Ventilanordnung bilden.

4. Verfahren nach Anspruch 3, bei dem ein Element ein bewgbares Ventilschließelement ist und das andere Element einen Ventilbetätigungsmechanismus hält, der betätigbar ist, um das bewegbare Ventilschließelement zu bewegen.

5. Verfahren nach Anspruch 3, bei dem das andere Element ein bewgbares Ventilschließelement ist und das eine Element einen Ventilbetätigungsmechanismus hält, der betätigbar ist, um das bewegliche Ventilschließelement zu bewegen.

6. Verfahren nach Anspruch 3, bei dem ein Element ein Ventilgehäuse ist und am anderen Element eine Membran direkt neben dem Ringvorsprung angebracht ist.

7. Verfahren nach Anspruch 3, bei dem eines der Elemente ein Ventilgehäuse ist und eine Membran zwischen dem ersten inneren zylindrischen Teil und dem zweiten äußeren zylindrischen Teil angeordnet ist, wenn die beiden Elemente sich im gekoppelten und zusammengesetzten Zustand befinden.

8. Verfahren nach einem der vorhergehenden Ansprüche, bei dem der erste innere zylindrische Teil aus einem Material besteht, das aus Polyvinylchlorid, Polystryrol, Polycarbonat und Polypropylen gewählt ist.

9. Verfahren nach einem der vorhergehden Ansprüche, bei dem weiterhin der Ringvorsprung mit einer äußeren radialen konischen Fläche ausgebildet wird, wobei der Durchmesser der konischen Fläche fortschreitend zum axialen Ende des äußeren zylindrischen Teils zunimmt, der zuerst in den elastischen axialen Endabschnitt des inneren zylindrischen Teils beim Einsetzen unter Ausüben einer Kraft eingesetzt wird, und wobei die konische Fläche für eine fortschreitende Aufweitung des elastischen axialen Endabschnittes beim Einsetzen unter Ausüben einer Kraft sorgt.

10. Verfahren nach einem der Ansprüche 1 bis 8, bei dem weiterhin der axiale Endabschnitt und der Ringvorsprung mit jeweiligen konischen Flächen derart ausgebildet werden, daß sie eine komplementäre Beziehung von Stirnseite zu Stirnseite haben, wobei die eine konische Fläche des axialen Endabschnittes einen Durchmesser hat, der fortschreitend bei Annäherung auf den axialen Endabschnitt des inneren zylindrischen Teils abnimmt, und die andere konische Fläche des Ringvorsprunges einen Durchmesser hat, der fortschreitend zum axialen Ende des äußeren zylindrischen Teils zunimmt, der zuerst in den axialen Endabschnitt des besagten inneren zylindrischen Teils beim Einsetzen unter Ausüben einer Kraft eingesetzt wird, und wobei die konischen Flächen für eine fortschreitende Aufweitung des elastischen axialen Endabschnitts beim Einsetzen unter Ausüben einer Kraft sorgen.

# FIG. 1

EP 0 234 835 B1

FIG. 2A

FIG. 2B

FIG. 2C

FIG. 3

FIG. 4

FIG. 5

# FIG. 6

FIG. 7A

FIG. 7B

FIG. 7C

FIG. 8A

FIG. 8B

FIG. 9A

F

FIG. 9B

G

FIG. 9C

G

# FIG. 10A

FIG. 10 B

FIG. 10 C